# EUROPEAN PATENT APPLICATION

(11) **EP 2 108 540 A1**
(43) Date of publication of application: **14.10.2009**
(21) Application number: 09004951.1
(22) Date of filing: 03.04.2009
(51) Int. Cl.: B60N 2/28

(54) **Child seat**

(30) Priority: 09.04.2008 NL 1035276
(71) Applicant: Maxi Miliaan B.V., 5704 RD Helmond (NL)
(72) Inventor: Schrooten, Mark, 2020 Antwerpen (BE)
(74) Representative: Dorna, Peter

(57) **Abstract**

An assembly comprises a chassis and a child seat that is detachably connectable to the chassis. The child seat is provided with at least one first connecting element, which is detachably connectable to a second connecting element provided in the chassis. The child seat comprises at least one tilting arm which is tiltable about a tilt axis, which tilting arm is provided with at least two first connecting elements. The chassis is provided with at least one pair of second connecting elements, each comprising a recess on a side facing the tilt axis. Cams can be positioned in the recesses for interconnecting the first and the second connecting elements.

## Description

Assembly comprising a chassis and a child seat being detachably connectable to the chassis, as well as such a child seat and such a chassis.

The invention relates to an assembly comprising a chassis and a child seat being detachably connectable to the chassis, which child seat is provided with at least one first connecting element, which is detachably connectable to a second connecting element provided in the chassis.

With such assemblies, which are known per se, a child seat is connected to a chassis, such as a stroller or a base frame present in a vehicle. By connecting the child seat to the chassis, a strong connection with the chassis is realised. Since the child seat can be disconnected from the chassis, the child seat can be easily used as a separate child seat or be connected to another chassis. Thus, a child seat can first be used in combination with a stroller, for example, after which the child seat, connected to a base frame in a vehicle, is used for safely transporting a child in the vehicle.

The assemblies that have been known so far are comparatively complex in design, and they are comparatively complex to operate.

The object of the invention is to provide an assembly in which a child seat can be connected to and disconnected from a chassis in a simple manner.

This object is accomplished with the assembly according to the invention in that the child seat comprises at least one tilting arm which is tiltable about a tilt axis, which tilting arm is provided with at least two first connecting elements, whilst the chassis is provided with at least one pair of second connecting elements, each comprising a recess on a side facing the tilt axis, wherein cams can be positioned in the recesses for interconnecting the first and the second connecting elements.

A strong connection between the child seat and the chassis is realised by means of the cams positioned in the recesses. By tilting the tilting arm about the tilt axis, all cams connected to the tilting arm are simultaneously moved into or out of the recesses. In this way a simple operation is obtained. Since a number of cams are furthermore connected to a number of recesses, a strong connection is moreover realised.

One embodiment of the assembly according to the invention is **characterised in that** the tilting arm can be tilted about the tilt axis against spring force.

When the child seat is being connected to the chassis and disconnected from the chassis, the tilting arm must be tilted about the tilt axis against spring force. In this way undesirable detachment of the connection between the cams connected to the tilting arm and the recesses is prevented in a simple manner. The connection between the chassis and the child seat can only be broken when a force sufficiently large for tilting the tilting arm about the tilt axis is exerted on the tilting arm.

Another embodiment of the assembly according to the invention is **characterised in that** the child seat is provided with at least two tilting arms, whose tilt axes extend substantially parallel to the longitudinal sides of the child seat.

The tilting arms extending on both longitudinal sides of the child seat provide a strong and stable connection between the child seat and the chassis. When the child seat is used in a vehicle, forces exerted on the child seat in case of a collision of the vehicle will extend substantially parallel to the longitudinal sides, and thus parallel to the tilt axes. Such forces will be taken up by the cams positioned in the recesses when the child seat is connected to the chassis. Since said forces extend in a direction transversely to the direction in which the cams can the risk of the cams undesirably moving out of the recesses is eliminated.

Yet another embodiment of the assembly according to the invention is **characterised in that** the tilting arms can be tilted about the tilt axes against spring force by means of a common operating element.

The connection between the child seat and the chassis can be broken in a simple manner by means of said common operating element.

Another embodiment of the assembly according to the invention is **characterised in that** the chassis is provided with at least two pairs of second connecting elements, with the recesses of a first pair of second connecting elements facing towards the recesses of the second pair of second connecting elements.

When a force extending from the first pair of second connecting elements towards the second pair of connecting elements, or vice versa, is exerted on the child seat, the cams are urged into the second pair of second connecting elements or the first pair of second connecting elements, respectively, so that a strong connection between the child seat and did chassis remains ensured.

Yet another embodiment of the assembly according to the invention is **characterised in that** the chassis comprises a plate-shaped part, with which the second connecting elements are connected.

Such a chassis is simple in design and can be used for various chassis, such as a chassis in a stroller, a base frame in a vehicle, a luggage carrier of a bicycle, etc. This makes it attractive for a user to buy various chassis for various uses, to which the child seat can then be connected. Several chassis that are known per se are provided with comparatively complex operating elements, so that the chassis are relatively expensive, which makes it unattractive to buy a number of chassis for different uses.

Yet another embodiment of the assembly according to the invention is **characterised in that** each cam comprises a sliding surface including an acute angle with the second connecting element, which sliding surface can slide along the second connecting element when the first connecting element is being connected to the second connecting element, as a result of which the tilting arm can be tilted to a position in which the sliding surface extends substantially parallel to the second connecting element, after which the tilting arm can be tilted in an opposite direction for positioning the cam in the recess of the second connecting element.

The sliding surface makes it possible to realise a connection between the cam and the recess in a simple manner.

The invention will now be explained in more detail with reference to the drawings, in which:
Figure 1 is a perspective, exploded view of an assembly according to the invention;
Figure 2 is a perspective view of the assembly of figure 1 in the assembled condition thereof;
Figures 3a and 3b are a perspective view and a cross-sectional view, respectively, of a child seat disconnected from the chassis;
Figures 4a and 4b are a perspective view and a cross-sectional view, respectively, of the child seat and the chassis being disconnected from each other, in which the tilting arm is tilted about the tilt axis;
Figures 5a and 5b are a perspective view and a cross-sectional view, respectively, of a child seat connected to the chassis.

Like parts are indicated by the same numerals in the figures.

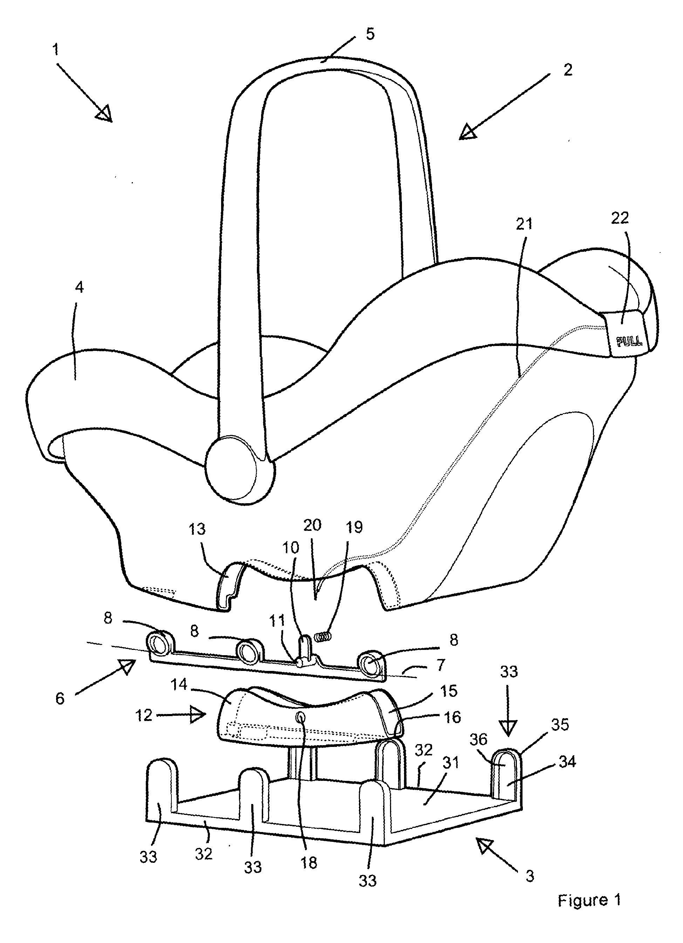

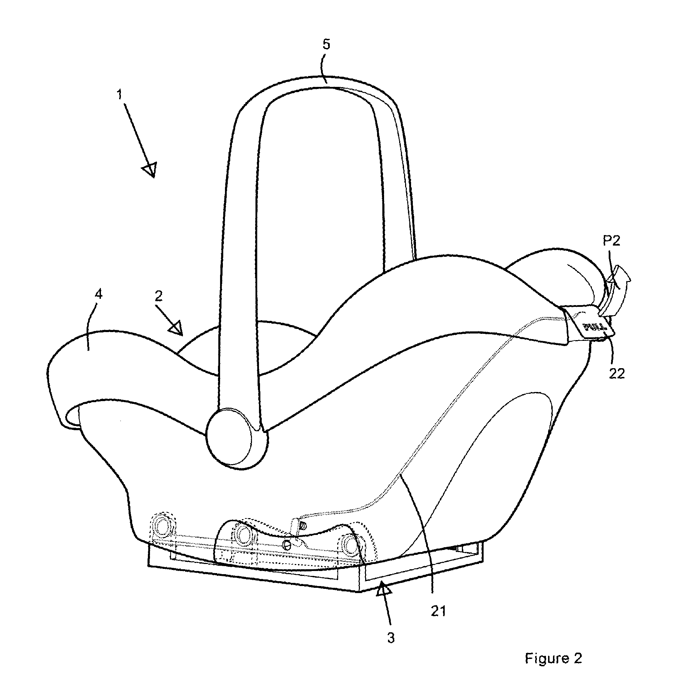

Figures 1 and 2 are perspective views of an assembly 1 according to the invention, which comprises a child seat 2 and a chassis 3. The child seat 2 comprises a bucket-shaped part 4 and a carrying handle 5, which is connected to the bucket-shaped part 4 on both longitudinal sides thereof. Such a child seat is known per se and will not be explained in more detail herein, therefore.

The child seat 2 further comprises tilting arms 6 disposed on both longitudinal sides of the bucket 4, only one of which is shown in the figures for the sake of clarity. The tilting arm that is not shown is provided in mirror image relative to a virtual plane of reflection extending between the two longitudinal sides.

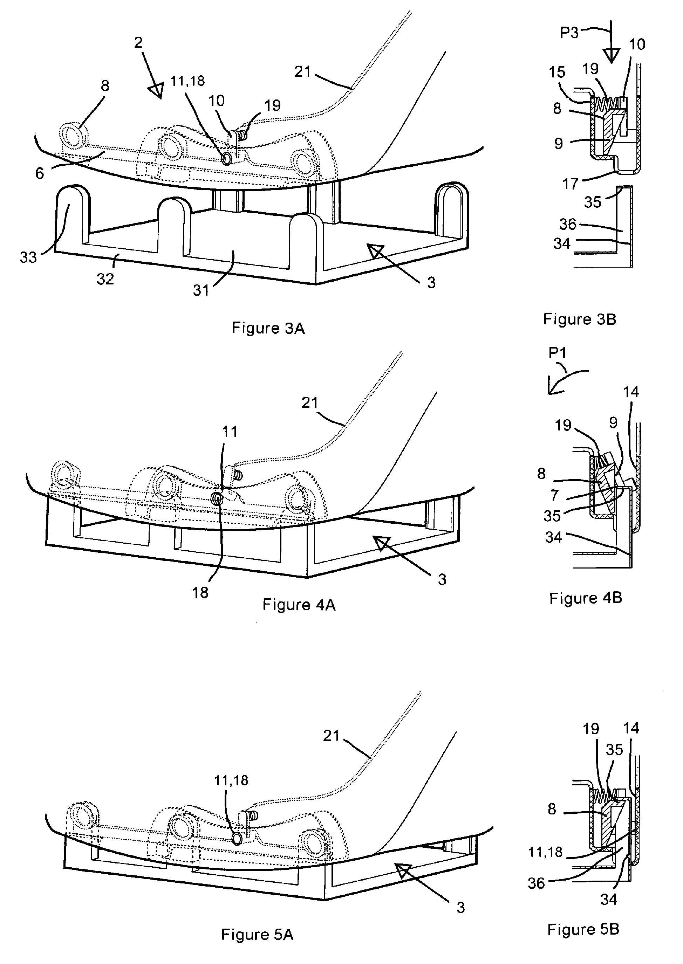

Each tilting arm 6 is tiltable in a direction opposed to the direction indicated by the arrow P1 about a tilt axis 7 that extends parallel to said longitudinal sides. The tilting arm 6 is provided with three cams 8, which are each provided with a sliding surface 9 (see figure 3b). The tilting arm 6 is further provided with a pin 10 extending transversely to the tilt axis 7 and with a signal knob 11 connected thereto, which signal knob extends transversely to the pin 10 and the tilt axis 7. The tilting arm 6 is mounted in a recess 13 in the bucket 4 by means of a slide 12. The slide 12 comprises two wall portions 14, 15 extending parallel to each other hand as well as a bridge portion 16 connecting said wall portions 14, 15. The bridge portion 16 is provided with two recesses 17 at its bottom side, whose function will be explained in more detail yet with reference to figures 3a-5b. The slide 12 is further provided with an opening 18 located in the wall portion 14, through which the signal knob 11 is visible in a position in which the child seat is disconnected from or correctly connected to the chassis 3. A spring 19 is disposed between the pin 10 and the wall portion 15, which spring exerts a force on the tilting arm 6, as a result of which the tilting arm 6, in a position in which the child seat 2 is not connected to the chassis 3, takes up a position such that the pin 10 extends vertically and the cams 8 take up the position shown in figure 3b.

An end 20 of a pulling cable 21 is furthermore connected to the pin 10, which pulling cable 21 is connected to an operating element 22 with an end remote from the end 20. The operating element 22 is connected to a second pulling cable 21, which is connected to the pin 10 of the other tilting arm 6 with an end remote from the operating element 22. By pivoting the operating element 22 in the direction indicated by the arrow P2 (see figure 2), the tilting arms 6 are tilted in the direction indicated by the arrow P1 about the tilt axes 7 (see figure 4B) against the spring force of the springs 19. When the operating element 22 is released by a user, the springs 19 will exert forces or on the tilting arms 6, as a result of which the tilting arms 6 will be tilted in the opposite direction of the arrow P1 about the tilt axes 7.

The assembly 1 is further provided with the chassis 3, which comprises a plate-shaped part 31. The plate-shaped part 31 is provided with three seconds connecting elements 33 on each longitudinal side 32, which connecting elements are spaced apart by a distance such that the second connecting elements 33 can mate with the six cams 8 of the two tilting arms 6. Each second connecting element 33 comprises a strip 34 extending transversely to the plate-shaped part 31 and a strip 35 extending along edges of the strip 34. The strip 34 and the strip 35 bound a recess 36. The recesses 36 of the second connecting elements 33 located on one longitudinal side 32 are oriented in the direction of the recesses 36 of the second connecting elements 33 on the other longitudinal side 32 of the plate-shaped part 31 of the chassis 3.

The manner of connecting the child seat 2 according to the invention to the chassis 3 according to the invention will now be explained in more detail with reference to figures 3a-5b.

In the relative positions of the child seat 2 and the chassis 3 shown in figures 3a and 3b, the longitudinal sides of the child seat 2 extend substantially parallel to the longitudinal sides 32 of the chassis 3. The cams 8 are positioned substantially above the second connecting elements 33. A user will hold the child seat 2 by the carrying handle 5 and subsequently move it downwards in the direction indicated by the arrow P3. During said movement, the openings 17 in the slide 12 of the child seat 2 are moved over the second connecting elements 33. Upon further movement of the child seat 2 in the direction indicated by the arrow P3, the sliding surface 9 of the cam 8 will make contact with a side of the strip 35 remote from the strip 34, as a result of which the cam 8 will be pivoted in the direction indicated by the arrow P1 about the tilt axis 7 against the spring force of the spring 19, until the sliding surface 9 extends substantially parallel to the strip 34 and can be moved down past the strip 35 (see figures 4a and 4b). The child seat 2 is moved in the direction indicated by the arrow P3 until the sliding surface 9 is located under the strip 35. The cam 8 is now tilted in the opposite direction of the arrow P1 under the influence of the spring 19, causing the cam 8 to be positioned in the recess 36 of the second connecting element 33 (see figures 5a and 5b). A strong connection between the child seat 2 and the chassis 3 has thus been effected by the cams 8 positioned in the recesses 36. The cams 8 are locked against movement in directions parallel to the tilt axes by the strip 35. The cams 8 are locked against movement in vertical direction by the plate-shaped part 31 and the strip 35. Once the cams 8 have taken up the position shown in figure 5b, the signal knob 11 will be visible through the opening 18, providing an extra indication to a user that the child seat 2 is directly connected to the chassis 3.

To disconnect the child seat from the chassis 3, a user will pivot the operating element 22 in the direction indicated by the arrow P2, as a result of which the tilting arms 6, and thus the cams 8, will be pivoted in the direction indicated by the arrow P1 to the position shown in figure 4b. The user can now lift the child seat 2 from the chassis 3 in the opposite direction of the arrow P3.

It is also possible to provide the chassis 3 with only four second connecting elements 33, in which case only two connecting elements 33 will be disposed on each longitudinal side 32. The child seat 2, which comprises six cams, can also be connected to such a chassis 3. Such a chassis 3 is cheaper and more compact than a chassis as shown in figure 1. A chassis comprising a lower number of connecting elements 33 is for example suitable for uses in which comparatively small forces are exerted on the connection between the child seat 2 and the chassis 3, for example when the chassis 3 is used with a stroller. When the chassis 3 is used in a base frame for use in a vehicle, in which case comparatively large forces are exerted on the child seat 2 in case of a collision, it is advisable to use a chassis 3 comprising a comparatively large number of second connecting elements 33.

It is also possible to have the tilt axis 7 extend transversely to the longitudinal sides.

It is also possible for the recesses 36 of the second connecting elements 33 to extend away from each other, in which case the cams 8 of the tilting arms 6 must be oriented towards each other.

## Claims

1. An assembly comprising a chassis and a child seat that is detachably connectable to the chassis, which child seat is provided with at least one first connecting element, which is detachably connectable to a second connecting element provided in the chassis, **characterised in that** the child seat comprises at least one tilting arm which is tiltable about a tilt axis, which tilting arm is provided with at least two first connecting elements, whilst the chassis is provided with at least one pair of second connecting elements, each comprising a recess on a side facing the tilt axis, wherein cams can be positioned in the recesses for interconnecting the first and the second connecting elements.

2. An assembly according to claim 1, **characterised in that** the tilting arm can be tilted about the tilt axis against spring force.

3. An assembly according to claim 1 or 2, **characterised in that** the child seat is provided with at least two tilting arms, whose tilt axes extend substantially parallel to the longitudinal sides of the child seat.

4. An assembly according to claim 3, **characterised in that** the tilting arms can be tilted about the tilt axes against spring force by means of a common operating element.

5. An assembly according to claim 3 or 4, **characterised in that** the chassis is provided with at least two pairs of second connecting elements, with the recesses of a first pair of second connecting elements facing towards the recesses of the second pair of second connecting elements.

6. An assembly according to any one of the preceding claims, **characterised in that** the chassis comprises a plate-shaped part, with which the second connecting elements are connected.

7. An assembly according to any one of the preceding claims, **characterised in that** each cam comprises a sliding surface including an acute angle with the second connecting element, which sliding surface can slide along the second connecting element when the first connecting element is being connected to the second connecting element, as a result of which the tilting arm can be tilted to a position in which the sliding surface extends substantially parallel to the second connecting element, after which the tilting arm can be tilted in an opposite direction for positioning the cam in the recess of the second connecting element.

8. A child seat suitable for an assembly according to any one of the preceding claims, which child seat comprises at least one tilting arm which is tiltable about a tilt axis, which tilting arm is provided with at least two first connecting elements.

9. A chassis suitable for an assembly according to any one of the preceding claims 1-7, **characterised in that** said chassis is provided with at least one pair of connecting elements, which each comprise a recess.
